# EUROPÄISCHE PATENTSCHRIFT

(11) **EP 3 312 761 B1**
(45) Veröffentlichungstag und Bekanntmachung des Hinweises auf die Patenterteilung: **15.07.2020**
(21) Anmeldenummer: 16194637.1
(22) Anmeldetag: 19.10.2016
(51) Int. Cl.: G06K 7/10

(54) **VERFAHREN ZUR ERFASSUNG VON BARCODES MITTELS EINES CODELESERS**
METHOD FOR RECORDING BAR CODES USING A CODE READER
PROCÉDÉ DE DÉTECTION DE CODES-BARRES AU MOYEN D'UN LECTEUR DE CODE

(30) Priorität: 18.10.2016 EP 16194276
(43) Veröffentlichungstag der Anmeldung: 25.04.2018
(73) Patentinhaber: Leuze electronic GmbH + Co. KG, 73277 Owen/Teck (DE)
(72) Erfinder: Droemer, Jörg, 72574 Bad Urach (DE); Sanzi Dr., Friedrich, 73230 Kirchheim/Teck (DE)
(74) Vertreter: Ruckh, Rainer Gerhard

(56) Entgegenhaltungen:
- EP-A1- 1 087 324
- US-A- 4 468 704
- US-A- 5 861 616

## Beschreibung

Die Erfindung betrifft ein Verfahren zur Erfassung von Barcodes.

Zur Erfassung derartiger Barcodes, die generell aus einer alternierenden Folge von hellen und dunklen Codeelementen bestehen, werden typischerweise Codeleser eingesetzt, die in Form von Barcodescannern ausgebildet sind. Ein derartiger Codeleser weist einen Sendelichtstrahlen emittierenden Sender und eine diesem nachgeordnete Ablenkeinheit auf. Mittels der Ablenkeinheit werden die Sendelichtstrahlen so abgelenkt, dass sie periodisch innerhalb jeweils eines Scans einen Abtastbereich abtasten. Von einem innerhalb des Abtastbereichs angeordneten Barcode werden die Sendelichtstrahlen reflektiert und als Empfangslichtstrahlen zum Empfänger geführt. Die Empfangslichtstrahlen und entsprechend die am Ausgang des Empfängers anstehenden Empfangssignale weisen dabei entsprechend dem Kontrastmuster des Barcodes eine Amplitudenmodulation auf. In einer Auswerteeinheit des Codelesers wird die Amplitudenmodulation der Empfangssignale ausgewertet und der Barcode dekodiert.

Für eine Dekodierung des Barcodes müssen die Breiten der einzelnen Codeelemente dieses Barcodes bestimmt werden. Dies bedeutet, dass anhand des Empfangssignals die Übergänge zwischen den hellen und dunklen Codeelementen möglichst genau bestimmt werden müssen.

Hierzu wird bei bekannten Codelesern das Empfangssignal differenziert und dann, für jeden Scan, der differenzierte zeitliche Empfangssignalverlauf ausgewertet. Zur Ermittlung der Hell-/ Dunkelübergänge wird dann das differenzierte Empfangssignal mit zwei Schwellwerten bewertet. Mit einem positiven Schwellwert werden die Maxima des Empfangssignalverlaufs bestimmt, wobei ein Maximum vorliegt, wenn das lokale Maximum des differenzierten Empfangssignals größer als der positive Schwellwert ist. Mit einem negativen Schwellwert werden die Minima des Empfangssignalverlaufs bestimmt, wobei ein Minimum vorliegt, wenn das lokale Minimum des differenzierten Empfangssignals kleiner als der negative Schwellwert ist.

Durch diese Schwellwertbewertung können bei der Signalauswertung Extremwerte mit kleinen Amplituden, die bedingt durch Rauscheffekte vorhanden sind, ausgeblendet werden, wodurch die Zuverlässigkeit der Barcodeerkennung verbessert wird.

Ein Problem bei diesem Auswerteverfahren besteht darin, dass dieses voraussetzt, dass die Barcodes in einem festen Leseabstand zum Codeleser angeordnet sind und die Sendelichtstrahlen so fokussiert sind, dass in dem Leseabstand der Durchmesser der Sendelichtstrahlen kleiner ist als die Breiten der Codeelemente der Barcodes.

Oft besteht jedoch eine Anforderung in einem Codeleser, dass dieser Barcodes in einem großen Tiefenschärfenbereich, das heißt in einem großen Abstandsbereich zum Codeleser, erkennen kann. Innerhalb dieses Tiefenschärfenbereichs variiert die Fokussierung der Sendelichtstrahlen, so dass in bestimmten Abstandsbereichen der Durchmesser der Sendelichtstrahlen größer ist als die Breiten der Codeelemente. In diesem Fall ist der differenzierte Empfangssignalverlauf nicht mehr symmetrisch zur Nulllinie, das heißt es können insbesondere Minima mit positiven Werten auftreten. Diese können mit den negativen Schwellwerten, die zur Minimalbestimmung eingesetzt werden, nicht mehr erfasst werden. Damit ist eine Erfassung und Dekodierung der Barcodes nicht mehr möglich.

Die EP 1 087 324 A1 betrifft eine optoelektronische Vorrichtung zum Erkennen von Barcodes mit jeweils einer Anordnung von hellen und dunklen Flächenelementen mit wenigstens einem Sendelichtstrahlen emittierenden Sender und einem Empfangslichtstrahlen empfangenden Empfänger mit einer matrixförmigen Anordnung von Empfangselementen, wobei der Barcode auf dem Empfänger abgebildet ist und an den Ausgängen der Empfangselemente Empfangssignale in Form von der Struktur der Flächenelemente des Barcodes entsprechenden Grauwerten anstehen. Dem Empfänger ist eine adaptive Schwellwerteinheit nachgeordnet, in welcher die Empfangssignale in binäre Signale gewandelt werden und in einer der adaptiven Schwellwerteinheit nachgeordneten Auswerteeinheit erfolgt anhand der Folge der binären Signale die Dekodierung der Marke.

Die US 5 861 616 A betrifft eine Vorrichtung zur Erkennung einer Wellenform eines analogen Signals. Dabei werden die Extremwerte des Signals bestimmt und abhängig hiervon adaptive Schwellwerte definiert, die vor Signalbewertung verwendet werden.

Die US 4 468 704 A betrifft eine adaptive Schwellwerteinheit zur Bearbeitung von Bildpixeln eines Bilds.

Der Erfindung liegt die Aufgabe zugrunde, ein Verfahren bereitzustellen, das eine Erfassung von Barcodes mittels eines Codelesers innerhalb eines großen Tiefenschärfenbereichs ermöglicht.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft ein Verfahren zur Erfassung von Barcodes mittels eines Codelesers, welcher einen Sendelichtstrahlen emittierenden Sender, eine Ablenkeinheit und einen Empfänger, auf welchen als Empfangslichtstrahlen von einem Barcode zurückreflektierte Sendelichtstrahlen auftreffen, aufweist. Mittels der Ablenkeinheit tasten die Sendelichtstrahlen periodisch innerhalb jeweils eines Scans einen Abtastbereich ab. Der Codeleser weist eine Auswerteeinheit auf, die dadurch gekennzeichnet ist, dass in der Auswerteeinheit zur Erfassung von Barcodes Empfangssignale am Ausgang des Empfängers gemäß den folgenden Verfahrensschritten ausgewertet werden.
- Bildung des differenzierten zeitlichen Empfangssignalverlaufs für jeden Scan,
- Bestimmen von gültigen Paaren von jeweils einem Minimum und einem auf diesem folgenden Maximum innerhalb des Empfangssignalverlaufs eines Scans,
- wobei bei einer Suche nach einem Minimum aufeinanderfolgende Empfangssignalwerte verglichen werden und der aktuelle Empfangssignalwert als aktuelles Minimum übernommen wird, wenn er kleiner als der vorherige Empfangssignalwert ist, und wobei ein aktueller Schwellwert Sₘᵢₙ aus der Summe des aktuellen Minimums und einer Schwelle δ₀, die als Anfangswert vorgegeben ist berechnet ist, wobei die Suche nach dem Minimum beendet wird, wenn der aktuelle Empfangssignalwert oberhalb des zuvor bestimmten aktuellen Schwellwerts Sₘᵢₙ liegt und darauf das aktuelle Minimum als gültiges Minimum gespeichert wird und darauf eine Suche nach einem Maximum gestartet wird, und wobei bei einer Suche nach einem Maximum aufeinanderfolgende Empfangssignalwerte verglichen werden und der aktuelle Empfangssignalwert als aktuelles Maximum übernommen wird, wenn er größer als der vorige Empfangssignalwert ist, und wobei ein aktueller Schwellwert Sₘₐₓ aus der Differenz des aktuellen Maximums und der oder einer weiteren Schwelle δ₀ berechnet ist, wobei die Suche nach dem Maximum beendet wird, wenn der aktuelle Empfangssignalwert unterhalb des zuvor bestimmten aktuellen Schwellwerts liegt, und danach das aktuelle Maximum als gültiges Maximum gespeichert wird und darauf die Suche nach einem Minimum gestartet wird,
- Ermitteln wenigstens einer geänderten Schwelle δ aus den abgespeicherten gültigen Minima und Maxima dieses Scans, wobei die geänderte Schwelle δ als bestimmter Bruchteil des Betrags eines ausgewählten Extremwerts definiert ist und wobei deren Wert betragsmäßig größer als deren Anfangswert ist.
- Bestimmen von endgültigen Paaren von jeweils aufeinanderfolgenden Paaren von Minima und Maxima, indem für die gespeicherten gültigen Paare von Minima und Maxima des Scans die Suche nach Minima und Maxima mit der geänderten Schwelle δ wiederholt wird.
- Dekodieren des Barcodes anhand der ermittelten endgültigen Paare von Minima und Maxima für den jeweiligen Scan und eines daraus abgeleiteten digitalen Empfangssignals, welches die Kodierung der Codeelemente des Barcodes enthält.

Der Erfindung liegt somit der Grundgedanke zugrunde, das differenzierte Empfangssignal, das die Informationen über einen mit dem Codeleser gelesenen Barcode enthält, nicht mit festen Schwellwerten, sondern mit adaptiven, vom Verlauf des differenzierten Empfangssignals abhängigen Schwellwerten zu bewerten. Durch diese fortlaufende Anpassung der Schwellwerte können Barcodes in einem großen Tiefenschärfenbereich erkannt werden, wodurch der Einsatzbereich des Codelesers erheblich erweitert wird.

Insbesondere ist vorteilhaft, dass die Schwellwerte zur Ermittlung von Minima und Maxima nicht auf bestimmte Vorzeichen beschränkt sind. Damit kann auch dann noch eine sichere Barcodeerkennung gewährleistet werden, wenn der Durchmesser der Sendelichtstrahlen in dem Leseabstand, in welchem der Barcode zum Codeleser angeordnet ist, signifikant größer ist als die Breiten der Codeelemente des Barcodes.

Besonders vorteilhaft ist, dass allein mit dem erfindungsgemäßen Auswerteverfahren und damit ohne aufwändige Optimierungen der Konstruktion des Codelesers dessen Tiefenschärfenbereich erhöht werden kann.

Bei dem erfindungsgemäßen Auswerteverfahren handelt es sich um ein zweistufiges Verfahren in Form einer adaptiven Schwellwertbewertung der differenzierten Empfangssignale.

In einem ersten Schritt werden im differenzierten Empfangssignalverlauf eines jeden Scans gültige Paare von Minima und Maxima ermittelt. Bei der Suche nach einem Minimum wird ausgehend von einem Anfangs-Empfangssignalwert, für den Fall, dass der Anfang eines Scans untersucht wird, ausgehend vom ersten Empfangssignalwert des Scans als Anfangswert geprüft, ob der aktuelle Empfangssignalwert kleiner ist als der vorige. Falls dies der Fall ist, wird der aktuelle Empfangssignalwert als aktuelles Minimum übernommen. Für dieses aktuelle Minimum wird der aktuelle Schwellwert Sₘᵢₙ durch Bilden der Summe des aktuellen Minimums und einer Schwelle δ₀ gebildet. Dadurch, dass der aktuelle Schwellwert den aktuellen Mittelwert enthält, ist dieser adaptiv an die laufenden Empfangssignalwerte angepasst. Dabei ist die Vorgehensweise bei der Suche nach einem gültigen Minimum derart, dass für einen Empfangssignalwert in der zeitlichen Folge des Empfangssignalverlaufs das aktuelle Minimum und der Schwellwert Sₘᵢₙ berechnet wird und der nachfolgende Empfangssignalwert mit dem aktuellen Minimum verglichen und mit dem aktuellen Schwellwert Sₘᵢₙ bewertet wird.

Dieselbe Vorgehensweise erfolgt bei der Suche nach Maxima im differenzierten Empfangssignalverlauf.

Durch die adaptive Anpassung des aktuellen Schwellwerts können Minima und Maxima des Empfangssignalverlaufs auch dann sicher ermittelt werden, wenn im Empfangssignalverlauf Minima und Maxima mit jeweils unterschiedlichen Vorzeichen enthalten sind.

Die als Anfangswert festgelegte Schwelle δ₀ in den Schwellwerten Sₘᵢₙ, Sₘₐₓ definiert ein Abbruchkriterium, das zu einer erhöhten Fehlersicherheit bei der Suche nach Minima und Maxima führt.

Bedingt durch Rausch- und Störeinflüsse weist der Empfangssignalverlauf keinen kontinuierlichen Kurvenverlauf auf, sondern ist geringen lokalen Schwankungen unterworfen. Derartige lokale Schwankungen würden zu einem vorzeitigen und fehlerhaften Abbruch bei der Suche nach einem Minimum oder Maximum führen, so dass nicht alle Extremwerte des Empfangssignalverlaufs aufgefunden werden könnten. Mit Einführen der Schwelle δ₀ in den Schwellwerten Sₘᵢₙ und Sₘₐₓ wird diese Fehlerquelle auf einfache Weise ausgeschlossen.

Damit wird mit dem ersten Verfahrensschritt für den Empfangssignalverlauf jedes Scans eine Folge von gültigen Minima und Maxima erhalten, die alle Hell-/Dunkelübergänge der Codeelemente des oder der im Abtastbereich erfassten Barcodes enthalten.

Diese im ersten Verfahrensschritt durchgeführte Suche nach gültigen Minima und Maxima im Empfangssignalverlauf eines Scans kann vorteilhaft noch dadurch verbessert werden, dass ein gültiges Paar eines Minimums und Maximums nur dann vorliegt, wenn der zeitliche Abstand zwischen diesen innerhalb eines Sollwertbereichs liegt.

Dabei wird als Vorwissen bei der Detektion des Barcodes berücksichtigt, dass die Breiten der Codeelemente bekannt sind. Entsprechend der Breiten dieser Codeelemente ergeben sich bei der bekannten Abtastgeschwindigkeit der Sendelichtstrahlen vorgegebene Zeitbereiche, innerhalb derer von den Hell-/Dunkelübergängen des Barcodes stammende Maxima und Minima aufeinanderfolgen. An diese Zeitbereiche ist der Sollwertbereich angepasst. Damit werden einzelne Extremwerte im Empfangssignalverlauf, die isoliert auftreten und nicht von Barcodes stammen können, verworfen und nicht als gültige Extremwerte übernommen, wodurch eine erhöhte Fehlersicherheit bei der Barcodedetektion erzielt wird.

Die Folge der gültigen Minima und Maxima jedes Scans wird in einer Tabelle oder dergleichen abgespeichert.

In einem weiteren Verfahrensschritt wird durch eine Amplitudenbewertung dieser gespeicherten gültigen Extremwerte eine geänderte Schwelle δ berechnet. Vorteilhaft wird dabei die geänderte Schwelle δ als bestimmter Bruchteil des Betrags eines ausgewählten Extremwerts definiert, wobei diese geänderte Schwelle δ größer ist als die im ersten Verfahrensschritt verwendete Schwelle δ₀.

Mit dieser geänderten Schwelle δ₀ wird in einem weiteren Verfahrensschritt die Suche nach Minima und Maxima wiederholt, wobei der Modus dieser Suche identisch ist wie bei dem ersten Verfahrensschritt, mit dem Unterschied, dass nun zur Bildung der Schwellwerte Sₘᵢₙ, Sₘₐₓ nicht mehr die Schwelle δ₀, sondern die geänderte Schwelle δ zugrunde gelegt werden.

Wesentlich hierbei ist, dass diese zweite Suche nach Minima und Maxima nicht anhand des ursprünglichen differenzierten Empfangssignalverlaufs erfolgt, sondern anhand der in der Tabelle gespeicherten gültigen Extremwerte. Aus diesem Signalverlauf wurden bereits durch die Extremwertsuche mit der anfänglich gewählten Schwelle δ₀ kleinere Signalschwankungen eliminiert. Durch die zweite Extremwertsuche mit der geänderten Schwelle δ können nun aus den verbliebenen gültigen Extremwerten die durch Rauschen bedingten Extremwerte von aus den Barcodes stammenden Extremwerten unterschieden und ausgefiltert werden.

Damit liegen in der so gefilterten Tabelle von Extremwerten nur noch die von den Barcodes selbst stammenden Extremwerte vor, so dass anhand dieser Extremwerte eine fehlerfreie Barcodedetektion durchgeführt werden kann.

Für den Fall, dass bei der Barcodedetektion nur ein Barcode im Lesebereich vorhanden ist, kann vorteilhaft die geänderte Schwelle δ für einen Scan konstant sein.

Dann wird zweckmäßig zur Ermittlung der geänderten Schwelle δ ein sich über einen Ausschnitt der Folge der gültigen Extremwerte des Scans erstreckendes Intervall definiert. Das Intervall beginnt zuerst am ersten Extremwert des Scans und wird dann schrittweise weitergeschoben, bis das Intervall am letzten Extremwert des Scans endet. Für jede Position des Intervalls wird der Mittelwert der Extremwerte innerhalb des Intervalls gebildet. Ein Extremwert wird zur Berechnung der geänderten Schwelle δ aus dem Intervall gewählt, für welches der Mittelwert maximal ist.

Bei dieser Methode wird der Umstand ausgenutzt, dass je nach Positionierung des Intervalls innerhalb des Scans in diesem Intervall im Wesentlichen nur Rauschsignalanteile erfasst werden können oder aber überwiegend Signalanteile, die von einem Barcode stammen. Im ersten Fall, bei welchem in dem Intervall im Wesentlichen nur Rauschanteile vorhanden sind, ergibt sich ein kleiner Wert für den Mittelwert der gültigen Extremwerte dieses Intervalls. Im zweiten Fall ist der Wert für den Mittelwert erheblich höher, da dann eine Vielzahl von von dem Barcode stammenden Extremwerten innerhalb des Intervalls liegen. Da erfindungsgemäß zur Berechnung der geänderten Schwelle δ ein, vorzugsweise der größte Extremwert aus dem Intervall gewählt wird, das den maximalen Mittelwert liefert, ist mit hoher Sicherheit gewährleistet, dass dieser Extremwert von dem gelesenen Barcode stammt und kein Rauschsignal ist. Daher ist gewährleistet, dass die geänderte Schwelle auf einen Nutzsignalanteil bezogen ist, was eine wesentliche Voraussetzung dafür ist, dass bei der folgenden Extremwertsuche mit der geänderten Schwelle die Rauschspitzen aus den gültigen Extremwerten ausgefiltert, die Nutzsignale jedoch alle erhalten bleiben.

Für den Fall, dass in den einzelnen Scans jeweils Signale von unterschiedlichen Barcodes enthalten sind, ist es zweckmäßig, für unterschiedliche Bereiche innerhalb eines Scans unterschiedliche geänderte Schwellen δ zu wählen.

Da die mit dem Codeleser erfassten Barcodes in unterschiedlichen Abständen angeordnet sein können, können abstandsabhängig die Empfangssignalwerte im Empfangssignalverlauf, die von den unterschiedlichen Barcodes stammen, entsprechend variieren. Daran angepasst werden zeitabhängige Schwellen δ aus dem Verlauf der gültigen Extremwerte abgeleitet, um diesem Umstand Rechnung zu tragen.

Besonders vorteilhaft wird zur Ermittlung der geänderten Schwellen δ ein sich über einen Abschnitt der Folge der gültigen Extremwerte des Scans erstreckendes Intervall definiert. Das Intervall beginnt zuerst am ersten Extremwert des Scans und wird dann schrittweise weitergeschoben, bis das Intervall am letzten Extremwert des Scans endet. Eine Anzahl von benachbart positionierten Intervallen wird zu einem Teilbereich des Scans zusammengefasst. In den Intervallen eines Teilbereichs wird der betragsmäßig größte Extremwert gesucht und aus diesem Extremwert wird die geänderte Schwelle δ für diesen Teilbereich berechnet.

Weiter vorteilhaft schließen die einzelnen Teilbereiche lückenlos aneinander an und erstrecken sich über den gesamten Scan.

Generell entspricht die oder eine geänderte Schwelle δ einem vorgegebenen Bruchteil des Betrags des jeweiligen Extremwerts.

Als besonders zweckmäßig hat es sich erwiesen, wenn die Schwelle δ etwa einem Drittel des jeweiligen Extremwerts entspricht.

Gemäß einer vorteilhaften Ausführungsform werden die am Ausgang des Empfängers anstehenden Empfangssignale mittels eines FIR-Filters differenziert.

Mittels des FIR-Filters ist eine besonders rauscharme Differenzierung der Empfangssignale möglich.

Die Erfindung wird im Folgenden anhand der Zeichnungen erläutert. Es zeigen:
- Figur 1:: Perspektivische Darstellung eines Ausführungsbeispiels eines Codelesers zur Durchführung der Erfassung von Barcodes.
- Figur 2:: Zeitliche Empfangsverläufe für die Detektion eines Barcodes mit dem Codeleser gemäß Figur 1.
- Figur 3.: Darstellung der erfindungsgemäßen Schwellwertbewertungen.
- Figur 4:: Schematische Darstellung der Ableitung einer Schwelle für die Schwellwertbewertung gemäß Figur 3.

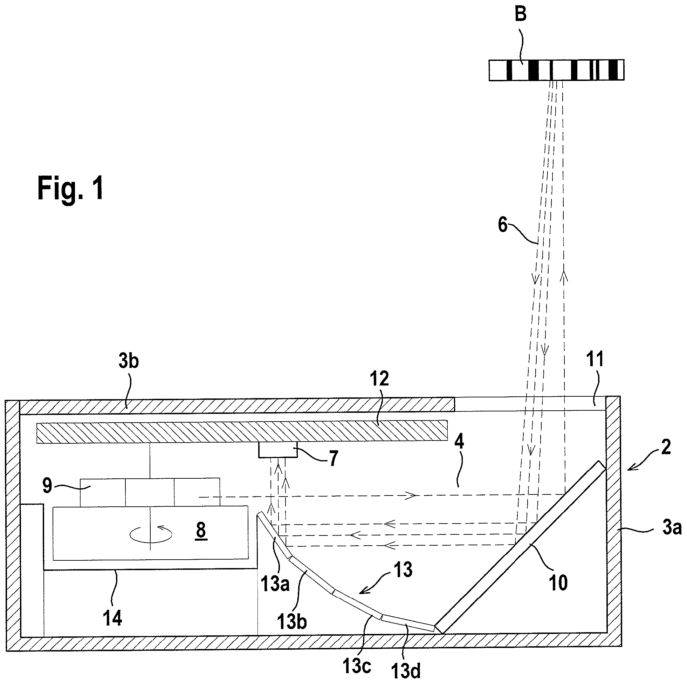

Figur 1 zeigt ein Ausführungsbeispiel eines Codelesers 1 zur Erfassung von Barcodes B. Der Barcode B besteht in bekannter Weise aus einer Folge von hellen und dunklen Codeelementen mit unterschiedlichen Breiten.

Die Komponenten des Codelesers 1 sind in einem quaderförmigen Gehäuse 2 integriert, das aus einem Gehäuseunterteil 3a und einem Gehäusedeckel 3b besteht.

Der Codeleser 1 weist einen Sendelichtstrahlen 4 emittierenden Sender 5 in Form einer Laserdiode und einen Empfangslichtstrahlen 6 empfangenden Empfänger 7 in Form einer Photodiode auf

Weiterhin weist der Codeleser 1 eine Ablenkeinheit in Form eines von einem Motor 8 angetriebenen Polygonspiegelrads 9 auf. Die Drehachse des Polygonspiegelrads 9 verläuft senkrecht zum Boden des Gehäuses 2, der bei der Anordnung von Figur 1 in einer horizontalen Ebene liegt. Mit dem Polygonspiegelrad 9 werden die Sendelichtstrahlen 4 innerhalb eines Abtastbereichs periodisch abgelenkt. Die am Polygonspiegelrad 9 reflektierten Sendelichtstrahlen 4 verlaufen dabei parallel zum Boden des Gehäuses 2 und treffen dann auf einen Umlenkspiegel 10, der um 45° bezüglich des Bodens geneigt ist. Die an dem Umlenkspiegel 10 reflektierten Sendelichtstrahlen 4 werden durch ein Austrittsfenster 11 aus dem Gehäuse 2 geführt.

Der Empfänger 7 ist an der Unterseite einer Leiterplatte 12 montiert, die dicht unterhalb des Gehäusedeckels 3b montiert ist. An den Umlenkspiegel 10 grenzt eine Empfangsoptik 13 an, die aus einer Anordnung von Planspiegeln 13a-d besteht. Die Planspiegel 13a-d sind so ausgebildet, dass mit diesen Empfangslichtstrahlen 6 von Barcodes B in einem großen Abstandsbereich zum Empfänger 7 geführt sind.

Die Empfangsoptik 13 verläuft in einem Neigungswinkel zum Boden des Gehäuses 2, so dass diese mit dem Umlenkspiegel 10 eine V-förmige Spiegelanordnung bildet. Während sich der Umlenkspiegel 10 bis zum oberen Rand des Gehäuseunterteils 3a erstreckt, erstreckt sich die Empfangsoptik 13 nur bis zu dem oberen Rand einer seitlichen Einfassung 14 des Polygonspiegelrads 9.

Die Empfangsoptik 13 stellt eine nicht abbildende Optik dar und stellt das einzige empfangsseitige Optikelement dar. Der oberhalb der Empfangsoptik 13 angeordnete Empfänger 7 braucht nicht gegenüber der Empfangsoptik 13 justiert werden, da die Empfangsoptik 13 mit den Planspiegeln 13a-d großflächige Optikelemente aufweist.

Die vom Sender 5 emittierten Sendelichtstrahlen 4 werden vom Polygonspiegelrad 9 in einer Abtastrichtung abgelenkt, die parallel zu den Planspiegeln 13a-d der Empfangsoptik 13 verläuft. Die so abgelenkten Sendelichtstrahlen 4 werden direkt zum Umlenkspiegel 10 geführt. Die am Umlenkspiegel 10 reflektierten Sendelichtstrahlen 4 durchsetzen das Austrittsfenster 11 und treffen auf den zu detektierenden Barcode B. Die am Barcode B zurückreflektierten Empfangslichtstrahlen 6 weisen eine dem Kontrastmuster des Barcodes B entsprechende Amplitudenmodulation auf. Die Empfangslichtstrahlen 6 durchsetzen das Austrittfenster 11 und werden dann am Umlenkspiegel 10 so abgelenkt, dass sie auf die Planspiegel 13a-d der Empfangsoptik 13 treffen, wobei die Auftreffpunkte der Empfangslichtstrahlen 6 auf den Planspiegeln 13a-d abhängig von der Distanz D des Barcodes B zum optischen Sensor 1 sind.

Von den Planspiegeln 13a-d der Empfangsoptik 13 werden die Empfangslichtstrahlen 6 direkt auf den Empfänger 7 geführt. Die dadurch generierten Empfangssignale werden zur Dekodierung des Barcodes B in der Auswerteeinheit des Codelesers 1 ausgewertet.

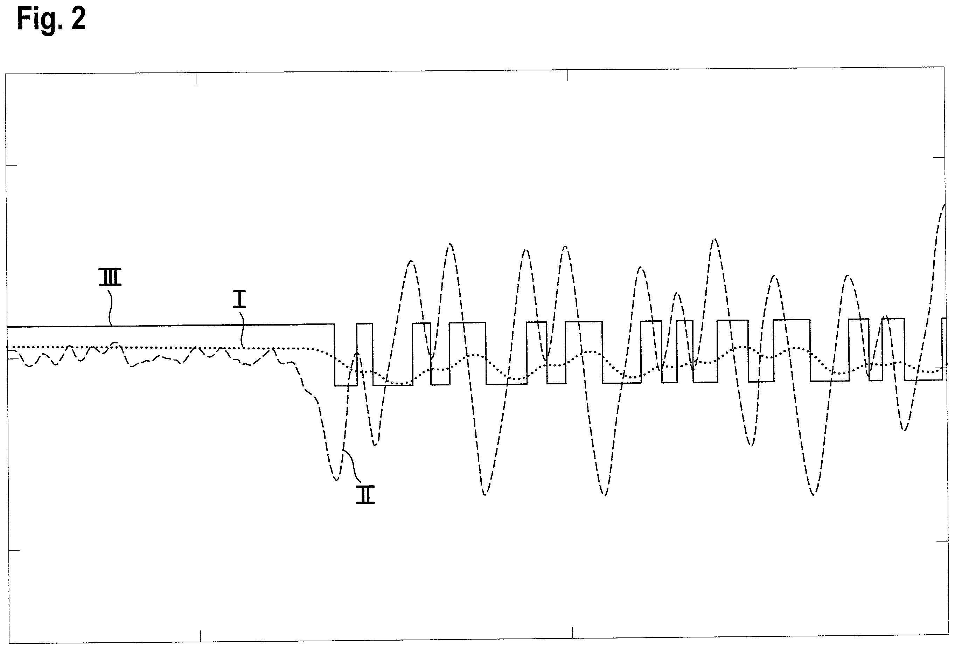

Figur 2 zeigt die relevanten zeitabhängigen Signalverläufe, die für die Erfassung der Barcodes B relevant sind. In Figur 1 ist mit I das am Ausgang des Empfängers 7 anstehende analoge Empfangssignal bezeichnet. Dieses analoge Empfangssignal wird in einem FIR-Filter, der Bestandteil der Auswerteeinheit sein kann, differenziert. Das differenzierte Empfangssignal ist in Figur 2 mit II bezeichnet. Ausgehend von diesem differenzierten Empfangssignal wird das in Figur 2 mit III bezeichnete digitale Empfangssignal gewonnen, dessen Signalfolge die Kodierung der Codeelemente des Barcodes B enthält, so dass anhand dieses digitalen Empfangssignals die Dekodierung des Barcodes B erfolgen kann.

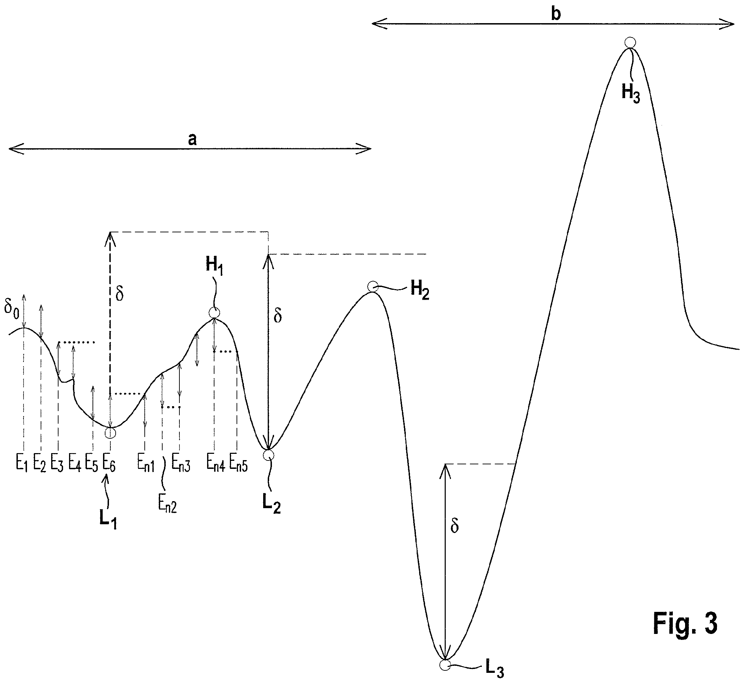

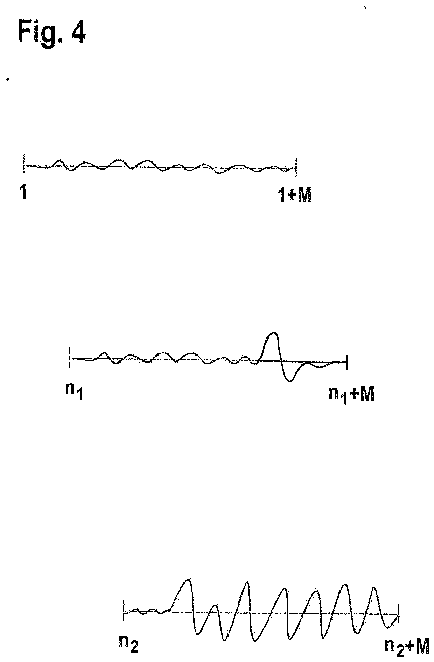

Mit dem in den Figuren 3 und 4 veranschaulichten erfindungsgemäßen Verfahren wird das differenzierte Empfangssignal zur Elimination von Rauschanteilen bearbeitet.

Dabei zeigt Figur 3 einen Ausschnitt des zeitlichen Empfangssignalverlaufs des differenzierten Empfangssignals. In einem Bereich a befinden sich Rauschsignalanteile, in einem Bereich B befinden sich Nutzsignalanteile, nämlich ein Minimum und ein Maximum, welche den Hell-/ Dunkelübergängen von Codeelementen des Barcodes B entsprechen.

Die nachfolgend beschriebene Auswertung bezieht sich auf einen Scan, das heißt der differenzierten Empfangssignale, die während einer Abtastung des Abtastbereichs mit den Sendelichtstrahlen 4 erhalten werden. Diese Auswertung wird in gleicher Weise für alle Scans wiederholt.

In einem ersten Verfahrensschritt wird der differenzierte zeitliche Empfangssignalverlauf nach Paaren von gültigen Minima und Maxima untersucht.

Die Suche nach einem gültigen Minimum ist in Figur 3, ausgehend von einem Empfangssignalwert E₁, das heißt einem ersten Wert des differenzierten Empfangssignalverlaufs, veranschaulicht.

Als Anfangswert für ein aktuelles Minimum wird der aktuelle Empfangssignalwert E₁ übernommen. Gleichzeitig wird ein aktueller Schwellwert Sₘᵢₙ gemäß der Beziehung Sₘᵢₙ = E₁ + δ₀ gebildet, das heißt der aktuelle Schwellwert Sₘᵢₙ setzt sich zusammen aus dem Empfangssignalwert E₁ und einer Schwelle δ₀, die als Anfangswert in der Auswerteeinheit vorgegeben ist. Der aktuelle Schwellwert Sₘᵢₙ bildet ein Abbruchkriterium für die Suche nach dem gültigen Minimum. Danach wird der folgende Empfangssignalwert E₂ darauf geprüft, ob dieser kleiner ist als das aktuelle Minimum. Da dies der Fall ist, wird der Empfangssignalwert E₂ als neues aktuelles Minimum übernommen und der aktuelle Schwellwert Sₘᵢₙ auf Sₘᵢₙ = E₂ + δ₀ festgesetzt. Dieselbe Vorgehensweise erfolgt für den folgenden Empfangssignalwert E₃, da dieser kleiner ist als der Empfangssignalwert E₂, das heißt es wird das aktuelle Minimum auf den Empfangssignalwert E₃ festgesetzt und der aktuelle Schwellwert auf Sₘᵢₙ = E₃ + δ₀ festgesetzt. Der nachfolgende Empfangssignalwert E₄ ist größer als der vorige Empfangssignalwert E₃. Daher verbleibt das aktuelle Minimum beim Empfangssignalwert E₃ und der Schwellwert bei dem Wert Sₘᵢₙ = E₃ + δ₀. Da der Empfangssignalwert E₄ kleiner ist als der zuvor berechnete aktuelle Schwellwert Sₘᵢₙ = E₃ + δ₀ ist das Abbruchkriterium für die Minimumsuche nicht erreicht, so dass die Minimumsuche fortgesetzt wird. Bei dieser Minimumsuche wird schließlich der Empfangssignalwert E₆ ermittelt. Da der Empfangssignalwert E₆ kleiner ist als der vorige Empfangssignalwert E₅ wird das aktuelle Minimum auf den Empfangssignalwert E₆ gesetzt. Die aktuelle Schwellwert Sₘᵢₙ wird auf den Wert Sₘᵢₙ = E₆ + δ₀ gesetzt. Danach steigen die Empfangssignalwerte kontinuierlich an, so dass der aktuelle Schwellwert bei dem Wert Sₘᵢₙ = E₆ + δ₀ verbleibt.

Bei dem Empfangssignalwert Eₙ₁ übersteigt dieses Empfangssignalwert schließlich den aktuellen Schwellwert Sₘᵢₙ, so dass die Minimumsuche beendet wird, das aktuelle Minimum bei E₆ als gültiges Minimum L₁ übernommen und gespeichert wird, und eine Maximumsuche gestartet wird. Hierzu wird der aktuelle Empfangssignalwert Eₙ₁ als Anfangswert für das aktuelle Maximum übernommen und ein aktueller Schwellwert Sₘₐₓ = Eₙ₁ - δ₀ definiert wird. Bis zum Empfangssignalwert Eₙ₂ steigen die Empfangssignalwerte immer kontinuierlich an, so dass immer der jeweils neue Empfangssignalwert für die Definition des aktuellen Maximums und des aktuellen Schwellwerts Sₘₐₓ übernommen wird. Insbesondere wird der Empfangssignalwert Eₙ₁ als aktuelles Maximum übernommen und der Schwellwert Sₘₐₓ gemäß Sₘᵢₙ = Eₙ₁ - δ₀ festgesetzt. Zwischen Eₙ₂ und Eₙ₃ sinken die Empfangssignalwerte leicht ab, so dass das aktuelle Maximum unverändert bei Eₙ₁ verbleibt. Da die Empfangssignalwerte zwischen Eₙ₂ und Eₙ₃ den konstant bei Sₘₐₓ = Eₙ₁ - δ₀ verbleibenden aktuellen Schwellwert Smax nicht unterschreiten, wird die Maximumsuche fortgesetzt. Bei der Maximumsuche wird schließlich der Empfangssignalwert Eₙ₄ ermittelt und als aktuelles Minimum übernommen. Da nachfolgend die Empfangssignalwerte kontinuierlich kleiner werden, verbleibt das aktuelle Maximum bei Eₙ₄. Bei dem Empfangssignalwert Eₙ₅ unterschreitet schließlich der aktuelle Empfangssignalwert den aktuellen Schwellwert Sₘₐₓ = Eₙ₄ - δ₀, so dass die Maximumsuche abgeschlossen und eine weitere Minimumsuche gestartet wird. Das zuletzt ermittelte aktuelle Maximum wird dann als gültiges Maximum H₁ übernommen.

Auf diese Weise werden die Empfangssignalwerte des gesamten Scans abgeprüft, wobei eine Folge von Paaren L₁, H₁, L₂, H₂, L₃, H₃ von gültigen Minima und Maxima erhalten wird.

Diese Paare werden dann daraufhin überprüft, ob die zeitlichen Abstände zwischen dem gültigen Minimum Lₙ und dem gültigen Maximum Hₙ eines Paares innerhalb eines vorgegebenen Sollwertbereichs liegt. Nur wenn dies der Fall ist, wird dieses Paar abgespeichert, ansonsten wird es verworfen. Der Sollwertbereich ist an die typischen Breiten der Codeelemente des Barcodes B angepasst. Damit wird mit der Abprüfung der zeitlichen Abstände gültiger Paare von Minima und Maxima eine Plausibilitätsprüfung durchgeführt, ob die entsprechenden zeitlichen Abstände der Paare in diesem Sollwertbereich liegen.

Anhand der gespeicherten gültigen Paare von Minima und Maxima erfolgt dann in einem weiteren Verfahrensschritt eine erneute Suche nach Minima und Maxima, entsprechend dem ersten Verfahrensschritt. Allerdings wird hierzu eine geänderte Schwelle δ verwendet, die aus einer Amplitudenbewertung der gültigen Paare von Minima und Maxima gewonnen wird, wie nachfolgend noch beschrieben wird.

Bei dem Beispiel gemäß Figur 3 ist die geänderte Schwelle δ konstant. Generell ist die geänderte Schwelle δ größer als die als Anfangswert verwendete Schwelle δ₀. Mit dieser geänderten Schwelle δ werden bei der Minimum - und MaximumSuche in der Folge der gespeicherten Paare von gültigen Minima und Maxima die durch Rauschen bedingten Extremwerte (in Figur 3 sind dies die Extremwerte L₁, H₁, L₂, H₂) von den von dem Barcode B stammenden Extremwerten (in Figur 3 sind dies die Extremwerte L₃, H₃) getrennt und verworfen.

Damit verbleiben in der Folge der gültigen Minima und Maxima nur noch die Nutzsignalanteile, das heißt die von dem Barcode B stammenden Extremwerte, anhand derer in der Auswerteeinheit die Dekodierung des Barcodes B erfolgt.

Die Verwendung einer konstanten geänderten Schwelle δ, wie in Figur 3 dargestellt, wird für Applikationen eingesetzt, in denen die zu detektierenden Barcodes B stets in einem konstanten Leseabstand zum Codeleser 1 angeordnet sind.

Bei der Methode zur Ermittlung einer konstanten geänderten Schwelle wird, wie in Figur 4 dargestellt, ein Intervall als Ausschnitt in der gespeicherten Folge der gültigen Minima und Maxima eines Scans definiert, welches eine konstante Größe aufweist. Die Größe des Intervalls ist an die typische Breite eines Barcodes B angepasst, so dass typischerweise etwa zehn Paare von Extremwerten in das Intervall passen. Dieses Intervall wird ausgehend vom ersten Extremwert (oberes Diagramm in Figur 4) mit einer festen Schrittweite, die insbesondere eins betragen kann, innerhalb der Folge der gültigen Extremwerte weiter geschoben.

Für jede Position des Intervalls wird der Mittelwert der Beträge der Amplituden der gültigen Extremwerte in diesem Intervall gebildet.

In dem Intervall des oberen Diagramms sind nur Extremwerte vorhanden, die allein durch Rauscheffekte bedingt sind. Daher wird für dieses Intervall ein kleiner Mittelwert erhalten. In dem Intervall des mittleren Diagramms sind bereits erste Extremwerte vorhanden, die vom detektierten Barcode B stammen, so dass hier der Mittelwert größer ist. In dem Intervall des unteren Diagramms sind nahezu ausschließlich von Barcodes B stammende Extremwerte vorhanden, so dass in diesem Fall der größte Mittelwert erhalten wird.

Unter Ausnutzung dieses Vorwissens, dass die von den Barcodes B stammenden Extremwerte betragsmäßig größere Werte als durch Rauschen verursachte Extremwerte liefern, wird aus der Folge der Intervalle dasjenige gesucht, das den größten Mittelwert liefert. Aus diesem ausgewählten Intervall wird dann der betragsmäßig größte gültige Extremwert gesucht. Aus diesem wird dann die geänderte Schwelle δ berechnet. Diese beträgt einen Bruchteil des Extremwerts, der vorzugsweise etwa bei einem Drittel liegt.

Für den Fall, dass mit dem Codeleser 1 Barcodes B in einem großen Tiefenschärfenbereich erkannt werden, variieren die von diesen Barcodes B stammenden Empfangssignale und differenzierten Empfangssignale erheblich. Um diesem Effekt Rechnung zu tragen, wird dann die geänderte Schwelle zeitabhängig gewählt.

Auch in diesem Fall wird, wie in Figur 3 dargestellt, ein Intervall definiert, das über die Folge der gültigen Extremwerte eines Scans geschoben wird.

In diesem Fall wird bei Durchschieben des Intervalls immer eine Anzahl von benachbarten Intervallen zusammenbetrachtet. Die Zahl der benachbarten zusammen betrachteten Intervalle beträgt vorzugsweise drei. In dieser Folge wird der betragsmäßig größte Extremwert gesucht, aus welchem dann für diesen durch die zusammengefassten Intervalle gebildeten Teilbereich die geänderte Schwelle abgeleitet wird.

### Bezugszeichenliste

- (1): Codeleser
- (2): Gehäuse
- (3a): Gehäuseunterteil
- (3b): Gehäusedeckel
- (4): Sendelichtstrahlen
- (5): Sender
- (6): Empfangslichtstrahlen
- (7): Empfänger
- (8): Motor
- (9): Polygonspiegelrad
- (10): Umlenkspiegel
- (11): Austrittsfenster
- (12): Leiterplatte
- (13): Empfangsoptik
- (13a-d): Planspiegel
- (14): Einfassung
- (B): Barcode

## Patentansprüche

1. Verfahren zur Erfassung von Barcodes (B) mittels eines Codelesers (1), welcher einen Sendelichtstrahlen (4) emittierenden Sender (5), eine Ablenkeinheit und einen Empfänger (7), auf welchen als Empfangslichtstrahlen (6) von einem Barcode (B) zurückreflektierte Sendelichtstrahlen (4) auftreffen, aufweist, wobei mittels der Ablenkeinheit die Sendelichtstrahlen (4) periodisch innerhalb jeweils eines Scans einen Abtastbereich abtasten, und wobei der Codeleser (1) eine Auswerteeinheit aufweist, **dadurch gekennzeichnet, dass** in der Auswerteeinheit zur Erfassung von Barcodes (B) Empfangssignale am Ausgang des Empfängers (7) gemäß den folgenden Verfahrensschritten ausgewertet werden.
• Bildung des differenzierten zeitlichen Empfangssignalverlaufs für jeden Scan,
• Bestimmen von gültigen Paaren von jeweils einem Minimum und einem auf diesem folgenden Maximum innerhalb des Empfangssignalverlaufs eines Scans,
• wobei bei einer Suche nach einem Minimum aufeinanderfolgende Empfangssignalwerte verglichen werden und der aktuelle Empfangssignalwert als aktuelles Minimum übernommen wird, wenn er kleiner als der vorherige Empfangssignalwert ist, und wobei ein aktueller Schwellwert Sₘᵢₙ aus der Summe des aktuellen Minimums und einer Schwelle δ₀, die als Anfangswert vorgegeben ist berechnet ist, wobei die Suche nach dem Minimum beendet wird, wenn der aktuelle Empfangssignalwert oberhalb des zuvor bestimmten aktuellen Schwellwerts Sₘᵢₙ liegt und darauf das aktuelle Minimum als gültiges Minimum gespeichert wird und darauf eine Suche nach einem Maximum gestartet wird, und wobei bei einer Suche nach einem Maximum aufeinanderfolgende Empfangssignalwerte verglichen werden und der aktuelle Empfangssignalwert als aktuelles Maximum übernommen wird, wenn er größer als der vorige Empfangssignalwert ist, und wobei ein aktueller Schwellwert Sₘₐₓ aus der Differenz des aktuellen Maximums und der oder einer weiteren Schwelle δ₀ berechnet ist, wobei die Suche nach dem Maximum beendet wird, wenn der aktuelle Empfangssignalwert unterhalb des zuvor bestimmten aktuellen Schwellwerts liegt, und danach das aktuelle Maximum als gültiges Maximum gespeichert wird und darauf die Suche nach einem Minimum gestartet wird,
• Ermitteln wenigstens einer geänderten Schwelle δ aus den abgespeicherten gültigen Minima und Maxima dieses Scans, wobei die geänderte Schwelle δ als bestimmter Bruchteil des Betrags eines ausgewählten Extremwerts definiert ist und wobei deren Wert betragsmäßig größer als deren Anfangswert ist,
• Bestimmen von endgültigen Paaren von jeweils aufeinanderfolgenden Paaren von Minima und Maxima, indem für die gespeicherten gültigen Paare von Minima und Maxima des Scans die Suche nach Minima und Maxima mit der geänderten Schwelle δ wiederholt wird.
• Dekodieren des Barcodes (B) anhand der ermittelten endgültigen Paare von Minima und Maxima für den jeweiligen Scan und eines daraus abgeleiteten digitalen Empfangssignals, welches die Kodierung der Codeelemente des Barcodes enthält.

2. Verfahren nach Anspruch 1, **dadurch gekennzeichnet, dass** ein gültiges Paar eines Minimums und Maximums nur dann vorliegt, wenn der zeitliche Abstand zwischen diesen innerhalb eines Sollwertbereichs liegt.

3. Verfahren nach einem der Ansprüche 1 oder 2, **dadurch gekennzeichnet, dass** zur Suche nach Minima und Maxima dieselbe Schwelle verwendet wird.

4. Verfahren nach einem der Ansprüche 1 bis 3, **dadurch gekennzeichnet, dass** die geänderte Schwelle δ für einen Scan konstant ist.

5. Verfahren nach Anspruch 4, **dadurch gekennzeichnet, dass** zur Ermittlung der geänderten Schwelle δ ein sich über einen Abschnitt der Folge der gültigen Extremwerte des Scans erstreckendes Intervall definiert wird, dass das Intervall zuerst am ersten Extremwert des Scans beginnt und dann schrittweise weitergeschoben wird, bis das Intervall am letzten Extremwert des Scans endet, dass für jede Position des Intervalls der Mittelwert der Extremwerte innerhalb des Intervalls gebildet wird, und dass ein Extremwert zur Berechnung der geänderten Schwelle δ aus dem Intervall gewählt wird, für welches der Mittelwert maximal ist.

6. Verfahren nach einem der Ansprüche 1 bis 3, **dadurch gekennzeichnet, dass** für unterschiedliche Bereiche innerhalb eines Scans unterschiedliche geänderte Schwellen δ gewählt werden.

7. Verfahren nach Anspruch 6, **dadurch gekennzeichnet, dass** zur Ermittlung der geänderten Schwellen δ ein sich über einen Abschnitt der Folge der gültigen Extremwerte des Scans erstreckendes Intervall definiert wird, dass das Intervall zuerst am ersten Extremwert des Scans beginnt und dann schrittweise weitergeschoben wird, bis das Intervall am letzten Extremwert des Scans endet, dass eine Anzahl von benachbart positionierten Intervallen zu einem Teilbereich des Scans zusammengefasst werden, dass in den Intervallen eines Teilbereichs der betragsmäßig größte Extremwert gesucht wird und dass aus diesem Extremwert die geänderte Schwelle δ für diesen Teilbereich berechnet wird.

8. Verfahren nach Anspruch 7, **dadurch gekennzeichnet, dass** die einzelnen Teilbereiche lückenlos aneinander anschließen und sich über den gesamten Scan erstrecken.

9. Verfahren nach einem der Ansprüche 1 bis 8 , **dadurch gekennzeichnet, dass** die am Ausgang des Empfängers (7) anstehenden Empfangssignale mittels eines FIR-Filters differenziert werden.

## Claims

1. Method for detecting bar codes (B) by means of a code reader (1) which has a transmitter (5) emitting transmitted light beams (4), a deflection unit and a receiver (7) on which transmitted light beams (4) reflected back from a bar code (B) impinge as received light beams (6), wherein by means of the deflection unit the transmitted light beams (4) periodically scan a scanning area within one scan in each case, and wherein the code reader (1) has an evaluation unit, **characterised in that** in the evaluation unit for detecting bar codes (B) received signals at the output of the receiver (7) are evaluated in accordance with the following method steps.
• forming the differentiated temporal reception signal profile for each scan,
• determining valid pairs of a minimum and a maximum following this minimum within the received signal path of a scan,
• wherein, in a search for a minimum, successive received signal values are compared and the current received signal value is adopted as the current minimum if it is smaller than the previous received signal value, and wherein a current threshold value Sₘᵢₙ is calculated from the sum of the current mininum and a threshold δ₀, which is predetermined as an initial value, wherein the search for the minimum is terminated when the current received signal value is above the previously determined current threshold value Sₘᵢₙ and the current minimum is stored thereon as a valid minimum and a search for a maximum is started thereon, and wherein successive received signal values are compared during a search for a maximum and the current received signal value is adopted as the current maximum if it is greater than the previous received signal value, and wherein a current threshold value Sₘₐₓ is calculated from the difference between the current maximum and the or a further threshold δ₀, wherein the search for the maximum is terminated when the current received signal value is below the previously determined current threshold value, and thereafter the current maximum is stored as a valid maximum and the search for a minimum is then started,
• determining at least one modified threshold δ from the stored valid minima and maxima of this scan, wherein the modified threshold δ is defined as a certain fraction of the amount of a selected extreme value and wherein its value is contractually greater than its initial value,
• determining final pairs of consecutive pairs of minima and maxima by repeating the search for minima and maxima with the modified threshold δ for the saved valid pairs of minima and maxima of the scan,
• decoding the barcode (B) on the basis of the determined final pairs of minima and maxima for the respective scan and a digital reception signal derived therefrom, which contains the coding of the code elements of the barcode.

2. A method according to claim 1, **characterised in that** a valid pair of a minimum and a maximum is only present if the time interval between them lies within a nominal value range.

3. A method according to one of claims 1 or 2, **characterised in that** the same threshold is used to search for minima and maxima.

4. A method according to one of claims 1 to 3, **characterised in that** the modified threshold δ is constant for a scan.

5. A method according to claim 4, **characterised in that** for determining the modified threshold δ an interval is defined which extends over a section of the sequence of valid extreme values of the scan, **in that** the interval first starts at the first extreme value of the scan and is then shifted step by step, until the interval ends at the last extreme value of the scan, that for each position of the interval the average of the extreme values within the interval is formed, and that an extreme value for calculating the changed threshold δ is selected from the interval for which the average is maximum.

6. A method according to one of claims 1 to 3, **characterised in that** different modified thresholds δ are selected for different areas within a scan.

7. A method according to claim 6, **characterised in that** to determine the modified thresholds δ, an interval extending over a section of the sequence of valid extreme values of the scan is defined, **in that** the interval first begins at the first extreme value of the scan and is then shifted step by step, until the interval ends at the last extreme value of the scan, that a number of adjacently positioned intervals are combined to form a sub-range of the scan, that the largest extreme value in terms of amount is searched for in the intervals of a sub-range and that the modified threshold δ for this sub-range is calculated from this extreme value.

8. A method according to claim 7, **characterised in that** the individual subareas adjoin one another without gaps and extend over the entire scan.

9. A method according to one of claims 1 to 8, **characterised in that** the received signals present at the output of the receiver (7) are differentiated by means of an FIR filter.

## Revendications

1. Procédé de détection de codes à barres (B) au moyen d'un lecteur de code (1) qui comporte un émetteur (5) émettant des rayons lumineux d'émission (4), une unité de déviation et un récepteur (7) sur lequel les rayons lumineux d'émission (4) réfléchis par un code à barres (B) tombent sous forme de rayons lumineux de réception (6), dans lequel, au moyen de l'unité de déviation, les rayons lumineux émis (4) balayent périodiquement une zone de balayage à l'intérieur de chaque balayage, et dans lequel le lecteur de code (1) comporte une unité d'évaluation, **caractérisé en ce que**, dans l'unité d'évaluation destinée à détecter des codes à barres (B), les signaux reçus à la sortie du récepteur (7) sont évalués selon les étapes de procédé suivantes.
• former le profil temporel différencié des signaux de réception pour chaque balayage,
• déterminer les paires valides d'un minimum et d'un maximum suivant ce minimum dans le trajet du signal reçu d'un balayage,
• dans lequel, lors d'une recherche d'un minimum, des valeurs successives de signaux reçus sont comparées et la valeur actuelle du signal reçu est adoptée comme minimum actuel si elle est inférieure à la valeur précédente du signal reçu, et dans lequel une valeur de seuil actuelle Sₘᵢₙ est calculée à partir de la somme du minimum actuel et d'un seuil δ₀, qui est prédéterminé comme valeur initiale, dans lequel la recherche du minimum est terminée lorsque la valeur actuelle du signal reçu est supérieure à la valeur de seuil actuelle Sₘᵢₙ déterminée précédemment et le minimum actuel y est stocké comme minimum valide et une recherche d'un maximum y est lancée, et dans lequel des valeurs successives de signaux reçus sont comparées pendant une recherche d'un maximum et la valeur actuelle du signal reçu est adoptée comme maximum actuel si elle est supérieure à la valeur précédente du signal reçu, et dans lequel une valeur de seuil actuelle Sₘₐₓ est calculée à partir de la différence entre le maximum actuel et le ou un autre seuil δ₀, dans lequel la recherche du maximum est terminée lorsque la valeur actuelle du signal reçu est inférieure à la valeur de seuil actuelle déterminée précédemment, et ensuite le maximum actuel est stocké comme un maximum valide et la recherche d'un minimum est alors lancée,
• déterminer au moins un seuil modifié δ à partir des minima et maxima valides stockés de cette analyse, dans lequel le seuil modifié δ est défini comme une certaine fraction du montant d'une valeur extrême sélectionnée et dans lequel sa valeur est contractuellement supérieure à sa valeur initiale,
• déterminer les paires finales de paires consécutives de minima et de maxima en répétant la recherche des minima et des maxima avec le seuil modifié δ pour les paires de minima et de maxima valides enregistrées du balayage,
• décoder le code à barres (B) sur la base des paires finales déterminées de minima et de maxima pour le balayage respectif et d'un signal de réception numérique dérivé de celui-ci, qui contient le codage des éléments de code du code à barres.

2. Procédé selon la revendication 1, **caractérisé en ce qu'**une paire valide d'un minimum et d'un maximum n'est présente que si l'intervalle de temps entre eux se situe dans une plage de valeurs nominales.

3. Procédé selon l'une des revendications 1 ou 2, **caractérisée en ce que** le même seuil est utilisé pour rechercher les minima et les maxima.

4. Procédé selon l'une des revendications 1 à 3, **caractérisé en ce que** le seuil modifié δ est constant pour un balayage.

5. Procédé selon la revendication 4, **caractérisé en ce que** pour déterminer le seuil modifié δ, un intervalle est défini qui s'étend sur une section de la séquence de valeurs extrêmes valides de l'analyse, **en ce que** l'intervalle commence d'abord à la première valeur extrême de l'analyse et est ensuite décalé pas à pas, jusqu'à ce que l'intervalle se termine à la dernière valeur extrême de l'analyse, **en ce que** pour chaque position de l'intervalle, la moyenne des valeurs extrêmes dans l'intervalle est formée, et **en ce qu'**une valeur extrême pour calculer le seuil modifié δ est choisie dans l'intervalle pour lequel la moyenne est maximale.

6. Procédé selon l'une des revendications 1 à 3, **caractérisée en ce que** différents seuils modifiés δ sont sélectionnés pour différentes zones au sein d'un balayage.

7. Procédé selon la revendication 6, **caractérisé en ce que** pour déterminer les seuils modifiés δ, un intervalle s'étendant sur une section de la séquence des valeurs extrêmes valides du balayage est défini, **en ce que** l'intervalle commence d'abord à la première valeur extrême du balayage et est ensuite décalé pas à pas, jusqu'à ce que l'intervalle se termine à la dernière valeur extrême de l'analyse, qu'un certain nombre d'intervalles positionnés de manière adjacente sont combinés pour former une sous-gamme de l'analyse, que la valeur extrême la plus élevée en termes de quantité est recherchée dans les intervalles d'une sous-gamme et que le seuil modifié δ pour cette sous-gamme est calculé à partir de cette valeur extrême.

8. Procédé selon la revendication 7, **caractérisée en ce que** les différentes sous-zones sont contiguës sans discontinuité et s'étendent sur l'ensemble de l'analyse.

9. Procédé selon l'une des revendications 1 à 8, **caractérisé en ce que** les signaux reçus présents à la sortie du récepteur (7) sont différenciés au moyen d'un filtre FIR.
